# EUROPÄISCHE PATENTSCHRIFT

(11) **EP 0 422 280 B1**
(45) Veröffentlichungstag und Bekanntmachung des Hinweises auf die Patenterteilung: **07.01.1993**
(21) Anmeldenummer: 89119021.7
(22) Anmeldetag: 13.10.1989
(51) Int. Cl.: A23L 3/36, A23B 4/06

(54) **Verfahren und Einrichtung zum Kühlen und Gefrieren von wasserhaltigen Lebensmitteln**
Process and apparatus for cooling and freezing aqueous food products
Procédé et appareil pour refroidir et congeler des aliments contenant de l'eau

(43) Veröffentlichungstag der Anmeldung: 17.04.1991
(73) Patentinhaber: SAUERSTOFFWERK FRIEDRICH GUTTROFF GMBH, D-97877 Wertheim (DE)
(72) Erfinder: Tallafus, Ottmar, D-6967 Buchen 1 (DE)
(74) Vertreter: Trappenberg, Hans

(56) Entgegenhaltungen:
- EP-A- 0 051 191
- EP-A- 0 069 688
- EP-A- 0 170 580
- FR-A- 2 271 521
- FR-A- 2 462 673
- FR-A- 2 498 429
- GB-A- 2 027 183
- NL-A- 7 710 692
- US-A- 2 529 388
- US-A- 4 657 768
- US-A- 4 697 429
- BULLETIN DE L'INSTITUT INTERNATIONAL DU FROID. ANN: 1, 1976, Annex 1, Seiten 269-276; J.M. MARER et al.: "Performance of carcass blast freezers

## Beschreibung

Die Erfindung betrifft ein Verfahren zum Kühlen und Gefrieren von wasserhaltigen Lebensmitteln, insbesondere von Fleisch und Fleischwaren, in mit einem kryogenen Kühlmittel (Kaltgas) versorgten Kühlkammern, wobei das Kaltgas - aus wirtschaftlichen Erwägungen vorzugsweise Stickstoff oder Kohlensäure - in flüssigem Zustand in die Kühlkammer eingesprüht und mittels Ventilatoren über die Lebensmittel geblasen wird, wobei Überschußgas über einen Abzug entweicht, sowie eine Einrichtung beziehungsweise Vorrichtung hierzu.

Zum Konservieren von Lebensmitteln sind verschiedene Verfahren bekannt. Eines davon ist die Kältekonservierung, wobei unter diesem Ausdruck alle Verfahren der Haltbarmachung von Lebensmitteln durch die Anwendung von Kälte, insbesondere die Kühllagerung und die Gefrierkonservierung, zusammengefaßt werden. Bei der Kühllagerung beziehungsweise beim Gefrieren werden durch die Verzögerung der biochemischen Umsetzung und des Wachstums von Mikroorganismen nicht vorbehandelte Lebensmittel auf eine natürliche Weise frisch gehalten. Kühl gelagerte Lebensmittel sind frische Lebensmittel und werden in der Regel als solche gehandelt. Kältegelagerte Lebensmittel setzen sich daher immer weiter durch.

Eine Abart der Kältebehandlung ist das Verfestigen, das sogenannte "Härten" von Fleisch und Fleischwaren zu deren Weiterbearbeitung, beispielweise durch Pressen oder Schneiden. Beim Pressen werden die Fleischwaren, wie auch ähnlich verformbare Lebensmittel, in eine bestimmte Form gedrückt; beim Schneiden beziehungsweise beim sogenannten slicen werden dünne Scheiben von der Ware abgeschnitten und anschließend sofort verpackt. Sowohl beim Pressen wie beim slicen ist es notwendig, dem Lebensmittel eine für diese Bearbeitung notwendige feste Konsistenz zu geben, was, abgesehen von einigen chemischen Verfestigern, die jedoch immer mehr verdrängt werden, durch Kühlen beziehungsweise Gefrieren geschieht.

Zum Kühlen beziehungsweise zum Gefrieren werden die Lebensmittel im allgemeinen auf Hordenwagen, hängend oder liegend, in eine Kältekammer verbracht, also in einen wärmeisolierten Raum, und dort durch Einsprühen von Kaltgas, also von kryogenen Flüssigkeiten, gekühlt beziehungsweise gefroren. Zur Unterstützung des Kühlvorgangens sind in der Kältekammer Ventilatoren untergebracht, die das Kaltgas an die zu kühlenden Lebensmittel im Kreislauf heranbringen. Der zum Abkühlen der Lebensmittel erforderliche Kältebedarf ist abhängig von der spezifischen Wärme des Kühlgutes im Abkühlbereich, der Temperatur des Kühlgutes vor Beginn und am Ende der Abkühlung, der Lagertemperatur und der Kühlzeit. Hierbei liegt die spezifische Wärme des Kühlgutes im Abkühlbereich fest, wie im allgemeinen auch die Temperatur am Ende der Abkühlung sowie auch die Lagertemperatur. Zu beeinflussen ist der Kältebedarf, und damit der Bedarf an Kühlmedium (Kaltgas), damit nur noch durch die Wahl der Temperatur des Kühlgutes vor Beginn der Kühlung und durch die Kühlzeit. Es wird daher angestrebt, das Kühlgut, also die zu kühlenden beziehungsweise zu gefrierenden Lebensmittel, bereits in kühlen Räumen zu verarbeiten oder, falls die Möglichkeit gegeben ist, die verarbeiteten Lebensmittel vor Einsetzen in die Kühlkammern vorzukühlen. Trotzdem muß die Kälteleistung und damit auch der Kältebedarf einer derartigen Einrichtung stets so ausgerichtet werden daß auch auf Raumtemperatur befindliche Lebensmittel aufgenommen und auf die Verarbeitungs- beziehungsweise Lagertemperatur herabgekühlt werden können.

Neben dieser Möglichkeit der Vorkühlung verbleibt letztlich noch der Einfluß auf die Kühlzeit. Diese Kühlzeit ist jedoch auch nicht frei wählbar, weil manche Lebensmittel sehr schnell gefroren oder zumindest abgekühlt werden müssen, während andere durchaus erst nach einigen Tagen auf ihre Lagertemperatur zurückzukühlen sind. Zu der ersten Kategorie gehört Fleisch, da dieses Lebensmittel sehr schnell bei normaler Temperatur verdirbt. Gerade aber Fleisch und Fleischwaren werden in verhältnismäßig großen Mengen benötigt und verarbeitet, so daß dessen Behandlung von großem wirtschaftlichen Interesse ist. Hierzu zählt selbstverständlich auch das Kühlen beziehungsweise Gefrieren des Fleisches beziehungsweise auch die wirtschaftliche Seite dieser Lagerhaltung beziehungsweise dieser Behandlung durch Kühlen zur weiteren Verarbeitung.

Das Kühlen von Fleisch und Fleischwaren, wie auch von anderen Lebensmitteln, wird derzeit so vorgenommen, daß die Raumtemperatur der Kühlkammern, in die die Lebensmittel eingebracht werden, auf einen bestimmten Wert, im allgemeinen auf minus 20°C bis minus 35°C eingeregelt wird und daß die Lebensmittel sodann eine bestimmte Zeit in der Kühlkammer verbleiben. Diese Zeitspanne wird geschätzt, je nach Lebensmittelart und auch nach der Größe der einzelnen Lebensmittelpackungen. Um die Kühlkammertemperatur auf einem konstanten Wert zu halten, wird stets Kühlmedium nachgesprüht, das zum großen Teil über den Abzug entweicht. Der Kühlmittelverbrauch ist daher bei diesem dem Stand der Technik zuzuzählenden Verfahren recht hoch. Eine weitere Möglichkeit ist dadurch gegeben, daß die Lebensmittel, die nicht so sehr schnell abgekühlt werden müssen, im Kühlhaus bei etwas unter der gewünschten Temperatur über mehrere Tage gelagert werden. Hierbei ist zwar der Kühlmittelverbrauch geringer, jedoch ist der Zeit- und damit auch der Raumaufwand sehr hoch. Außerdem werden durch die langsame Abkühlung verhältnismäßig große Eiskristalle innerhalb der Lebensmittel gebildet, die nicht nur für den Lagerungseffekt unerwünscht sind, sondern sich auch bei der Weiterverarbeitung, insbesondere beim slicen, störend bemerkbar machen. Gefürchtet ist hierbei insbesondere der sogenannte "Diskuseffekt". Dieser Effekt bewirkt das Aufeinandergleiten von Wurstscheiben, so daß sie nicht von Verpackungsautomaten in die gewünschte Verpackungslage verbracht werden können. Hierdurch ist nicht nur zusätzliche manuelle Arbeit notwendig, sondern es entsteht auch sehr viel Ausschuß.

Aufgabe der Erfindung ist es daher eine Möglichkeit anzugeben, wie der zum Abkühlen beziehungsweise Gefrieren der Lebensmittel notwendige Kältebedarf, insbesondere durch Abkürzung der Kühlzeit, vermindert und damit das Kühlen und Gefrieren der Lebensmittel wirtschaftlicher gestaltet werden kann. Ein weiteres Ziel ist, die Bildung großer Eiskristalle durch schnelles Abkühlen oder schnellstmögliches Gefrieren zu vermeiden. Erreicht wird dies in erfindungsgemäßer Weise dadurch, daß in die Kühlkammer stets nur soviel Kaltgas eingesprüht beziehungsweise eingeblasen wird, daß sich eine Temperatur in der Randschicht der Lebensmittel einstellt, die in oder geringfügig oberhalb (wärmer) der Erstarrungstemperatur des Lebensmittels liegt und erst dann, wenn die Kerntemperatur ebenfalls diesen Wert erreicht hat, die Kühl- beziehungsweise Gefriertemperatur in der Kühlkammer beziehungsweise diejenige des zu kühlenden beziehungsweise zu gefrierenden Lebensmittels weiter abgesenkt (kälter) wird.

Nicht also wie bisher werden die zu kühlenden beziehungsweise zu gefrierenden Lebensmittel in eine Kühlkammer verbracht, in der eine mehr oder weniger konstante Kühltemperatur herrscht und die Lebensmittel dort über eine gewisse geschätzte Zeit belassen, bis angenommen werden kann, daß die Lebensmittel bis zum Kern die gewünschte Kältetemperatur erreicht haben, sondern es wird über einen gewissen Zeitraum lediglich soweit gekühlt beziehungsweise lediglich soviel Kaltgas zugeführt, daß das Lebensmittel noch kurz unterhalb der Erstarrungstemperatur verbleibt, solange, bis diese Temperatur sich auch im Kern eingestellt hat; dann erst wird weiteres Kaltgas bis zum Erreichen der gewünschten Endtemperatur zugegeben. Wie praktische Versuche gezeigt haben, reduziert sich hierbei der Kaltgasbedarf enorm, bis etwa zu einem Fünftel der bisher verbrauchten Mengen beziehungsweise das Kühlen oder Gefrieren der Lebensmittel wird dadurch deutlich wirtschaftlicher. Theoretisch kann dies so erklärt werden, daß sich stets ein Wärmestrom von der wärmeren zur kälteren Stelle ergibt, in diesem Falle also ein Wärmestrom vom Kern des Lebensmittels zu dessen Außenseite. Wird die Außenseite jedoch wie bisher sehr stark abgekühlt, so wird das dort befindliche Wasser ausgefroren beziehungsweise es ergibt sich eine randständige Eisschicht, die eine Barriere für die vom Kern zum Rand strömende Wärme darstellt, so daß die im Kern gespeicherte Wärme nur sehr langsam nach außen abfließen kann. Dies bedingt die sehr lange Kühlzeit bei dem zum Stand der Technik zuzuzählenden Verfahren. Wird hingegen so verfahren, wie dies die Erfindung vorschreibt, so bildet sich keine solche Eisbarriere, da die Randschicht stets unterhalb der Erstarrungstemperatur gehalten wird beziehungsweise unterhalb der Umwandlungstemperatur, in der bei dem jeweiligen Lebensmittel das Wasser zu Eis gefriert. Dadurch ergibt sich eine gleichbleibende Wärmeleitfähigkeit, bis auch im Kern diese Temperatur erreicht ist, so daß das Lebensmittel bis zum Kern sehr schnell auf diese bei der Erstarrungstemperatur liegende Temperatur durchgekühlt wird. Erst dann wird mehr Kaltgas eingesprüht, um das Lebensmittel auf die gewünschte Endtemperatur zu kühlen. Hierbei ergibt sich zwar die unerwünschte Eisbarriere, die jedoch sehr schnell das Lebensmittel durchwandert, da das Lebensmittel zuvor schon insgesamt bis kurz vor die Erstarrungstemperatur durchgekühlt ist. Selbstverständlich tritt dann noch der Effekt ein, daß die zur Eisbildung notwendige Schmelzwärme aufgebracht werden muß, wobei diese Schmelzwärme jedoch auch der im Lebensmittel gespeicherten Wärme entzogen wird.

Insgesamt ergibt sich dadurch, wie oben schon dargelegt, eine deutliche Verminderung des Kaltgasverbrauches und damit auch eine deutliche Verminderung der bei der Kühlung beziehungsweise beim Gefrieren der Lebensmittel entstehenden Kosten.

Hinsichtlich des Erstarrungspunktes beziehungsweise der Erstarrungstemperatur ist anzuführen, daß diese Temperatur von dem Lebensmittel abhängig ist. Das im Lebensmittel enthaltene gefrierbare Wasser kommt nämlich nie rein vor, sondern ist stets eine ungesättigte Lösung von Salzen, Zuckern, Fetten und anderen löslichen Stoffen. Daher beginnen die Lebensmittel je nach der Konzentration ihrer Zellsäfte erst im Temperaturbereich von minus 0,5°C bis etwa minus 12°C zu gefrieren. Dieser Gefrierprozeß ist je nach Lebensmittel erst bei minus 10°C bis minus 30°C praktisch abgeschlossen. Eine gewisse Menge Wasser gefriert auch bei tieferen Temperaturen nicht aus. Der Anteil an diesem nicht gefrierbaren Wasser ist bei den meisten Produkten fest an das Eiweiß oder an Kohlehydrate gebunden und liegt je nach dem Gehalt an Trockensubstanz zwischen 4 % und 12 %. Als Anhalt können einige Erstarrungstemperaturen angegeben werden. So liegt rohes Fleisch bei etwa minus 2°C bis minus 3°C, Leberkäse und Brühwürste bei etwa minus 4°, Kochschinken bei etwa minus 4,7°C, Sülzen und Aspik bei etwa minus 7°C bis minus 8°C und geräucherter roher Schinken bei etwa minus 10°C bis minus 12°C.

Bringt schon dieses erfindungsgemäße Kühlverfahren eine wesentliche Minderung des einzusetzenden Kaltgases, so kann eine nochmalige Reduzierung dadurch stattfinden, daß das flüssige Kaltgas in vom Gasdruck in der Kühlkammer abhängingen Intervallen eingesprüht wird. Flüssiges Kaltgas, beispielsweise flüssiger Stickstoff, dehnt sich im gasförmigen Zustand auf das 646-fache Volumen aus. Diese plötzliche Volumenvergrößerung des Gasinhaltes der Kühlkammer bewirkt selbstverständlich eine Druckerhöhung, es sei denn, die erstmals in der Kammer befindliche Luft beziehungsweise später dann das Kaltgas kann über einen freien Abzug entweichen. In erfindungsgemäßer Weise wird dieses unkontrollierte Entweichen dadurch verhindert, daß in den Abzug eine einstellbares Druckregelklappe eingefügt ist, die so einstellbar ist, daß erst bei einem eingestellten Überdruck von etwa 10 mb bis 40 mb Gas über diesen Abzug entweichen kann. Diese einstellbare Druckregelklappe stellt damit sicher, daß stets nur in Intervallen eine bestimmte Menge flüssigen Kaltgases eingesprüht wird, im Zusammenhang mit Temperaturfühlern im Kern und in den Randschichten der Lebensmittel, daß sich gerade die oben angeführte, geringfügig oberhalb der Erstarrungstemperatur liegenme Temperatur einstellt. Zum erstmaligen Abkühlen des Gasinhaltes der Kühlkammer wird allerdings ein höherer Gasdruck zugelassen, damit eine schnellere Abkühlung auf die gewünschte Temperatur erfolgt. Damit ist sichergestellt, daß das über den Abzug entweichende Kaltgas minimiert wird, obwohl das zu kühlende Lebensmittel stets so, wie erfindungsgemäß vorgeschlagen, optimal gekühlt wird.

Als Einrichtung zur Durchführung des beschriebenen Verfahrens wird weiterhin vorgeschlagen, daß in der Kühlkammer beidseits angeordnete Sprührohre für das flüssige Kaltgas angeordnet sind sowie daß einseitig in der Kühlkammer stets in gleicher Drehrichtung angetriebene Ventilatoren, hinter denen Umlenkhauben angebracht sind, angeordnet werden. Die Anordnung, nur einseitig Ventilatoren vorzusehen statt wie in derartigen Kühlkammern bisher beidseitig, vermindert nicht nur den Investitionsaufwand, sondern vermindert auch die durch die Verlustenergie der Ventilatoren erzeugte Verlustwärme. Zwar ist eine ähnliche Einrichtung auch schon bekannt geworden, bei der nur einseitig Ventilatoren angeordnet sind, jedoch werden diese Ventilatoren in gewissen Zeitintervallen jeweils in ihrer Drehrichtung umgeschaltet, um einmal das Kaltgas über die Lebensmittel anzusaugen und zum anderen über diese Lebensmittel hinüberzublasen. Das Umschalten der Drehrichtung der Motoren ist nicht nur eine große mechanische Belastung, sondern erzeugt auch nochmals den Kühlmittelverbrauch steigernde Verlustwärme. Die angeführten Umlenkhauben sollen in erfindungsgemäßer Weise so angeordnet sein, daß sie jeweils im Zentrum des von den Ventilatoren erzeugten Luftstromes angebracht sind und den Luftstrom durch ihre konkave Gestaltung um etwa 180° umlenken. Dadurch ergibt sich ein Luftkreislauf, gebildet aus dem Ansaugstrom, der Kaltgas über die Lebensmittel zum Ventilator führt und ein Rückstrom, von den Ventilatoren weg, ebenfalls wieder über die Lebensmittel, der sich jenseits der Lebensmittel wieder mit dem Ansaugstrom vereinigt.

Schließlich wird nach der Erfindung auch noch eine Vorrichtung angegeben, die es ermöglicht, die Temperaturen in der Randschicht und im Kern der Lebensmittel zu messen. Gekennzeichnet ist sie durch zwei Einstechelektroden, in deren Spitze jeweils Temperaturfühler eingefügt sind. Um die Einstechelektroden bei den gegebenen Lebensmitteln jeweils in die korrekte Lage einzustechen beziehungsweise die Temperaturfühler in die korrekte Lage zu verbringen, sollen sie mit jeweils einem einstellbaren Tiefenanschlag versehen sein. Außerdem hat es sich als zweckmäßig erwiesen, die Einstechelektroden leicht konisch auszubilden, um sie, auch nachdem das Lebensmittel gefroren ist, leicht aus ihm entfernen zu können.

Auf der Zeichnung ist der Abkühlungsverlauf eines Lebensmittels, in diesem Falle Rindfleisch, in einem
Fig. 1 Diagramm gezeigt;
Fig. 2 zeigt schematisch die Spitze einer Einstechelektrode und
Fig. 3 die Ansicht einer Kühlkammer mit eingefahrenem Hordenwagen.

Auf der Abszisse des Diagramms ist die Abkühlzeit in Stunden, auf der Ordinate die sich hierbei ergebende Temperatur des Lebensmittels bei einer Umgebungstemperatur beziehungsweise Kühlkammertemperatur von minus 35 °C dargestellt. Das hier zu kühlende Rindfleisch wird bei einer Temperatur von etwa 15°C in die Kühlkammer verbracht, kühlt sehr schnell durch bis auf eine Temperatur von etwa minus 3°C und ist damit geringfügig wärmer als die kurz darunterliegende Erstarrungstemperatur. Nachdem auch der Kern diese Erstarrungstemperatur erreicht hat, wird mehr Kaltgas in die Kühlkammer zugegeben, so daß nunmehr die Eisbildung stattfindet, wobei über eine gewisse Zeit, bedingt durch die Schmelzwärme, die Temperatur gleichbleibt und danach wiederum sehr stark abfällt. Zwischen der einfach strichpunktierten und der doppelt strichpunktierten Linie befindet sich die Zone mit der größten Eisbildung, so daß nach Durchlaufen dieser Zone sämtliches zu gefrierende Wasser im Lebensmittel ausgefroren ist. Hat das Lebensmittel diese Zone durchschritten, kann es als "gehärtet" bezeichnet, also in beliebiger Art und Weise verarbeitet oder auch gelagert werden.

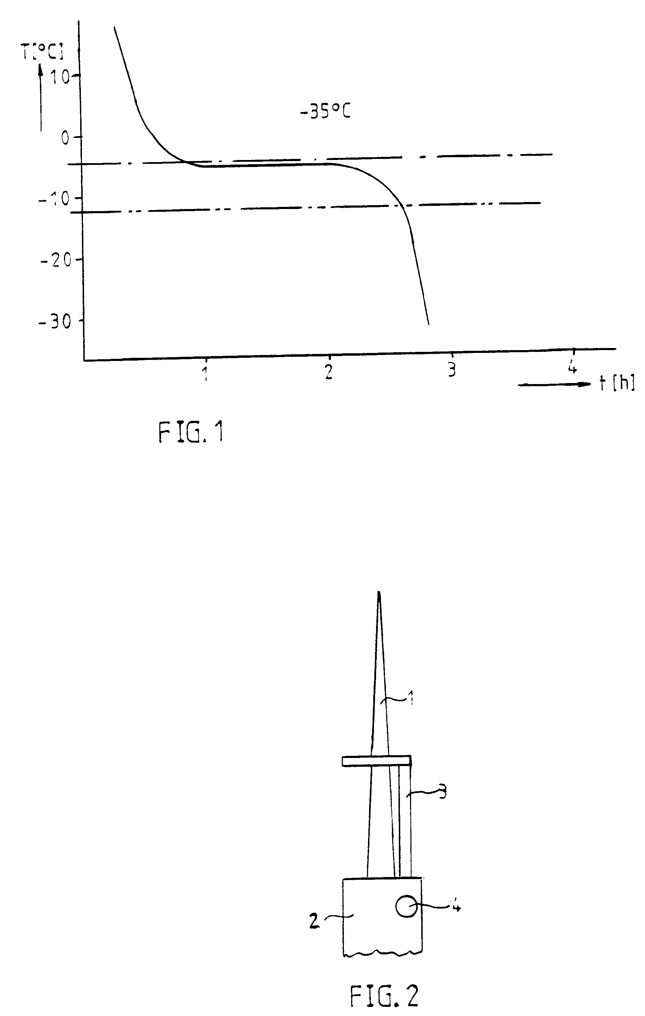

Fig. 2 zeigt die Spitze einer erfindungsgemäßen Einstechelektrode. Diese aus Edelstahl bestehende Einstechelektrode (1) ist konisch ausgeführt, wobei in der Spitze ein Temperaturfühler untergebracht ist. Im Handgriff (2) der Einstechelektrode ist ein einstellbarer Tiefenanschlag (3) untergebracht, der mittels eines Verriegelungsknopfes (4) in der jeweils gewünschten Länge aus dem Handgriff (2) ausgefahren werden kann. Sollten die konischen Meßspitzen durch grobe Behandlung verbogen sein, so können sie leicht ausgewechselt werden, ohne daß die in ihnen untergebrachten Temperatursensoren beschädigt werden. Die Meßleitungen der Elektroden sind zum Schutz gegen grobe Behandlung von einem Wellschlauch aus Edelstahl umgeben und zusätzlich mit Edelstahl-Drahtgewebe umsponnen.

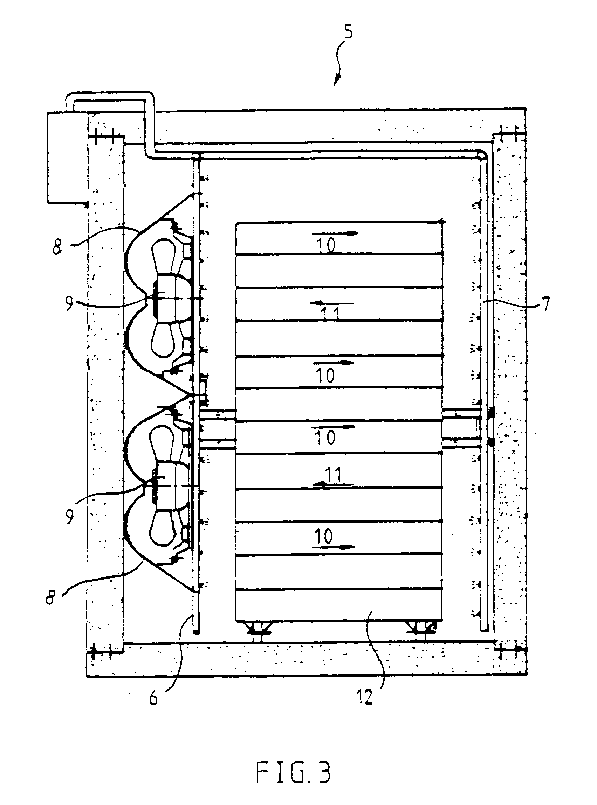

Fig. 3 zeigt eine Kühlkammer (5) mit beidseits angeordneten Sprührohren (6, 7) zum Einsprühen des Kältemediums. Zwischen diesen Sprührohren (6, 7) ist ein Hordenwagen (12) in die Kühlkammer (5) eingefahren. Einseitig, zwischen der Kühlkammerwandung und dem Sprührohr (6) sind von Umlenkhauben (8) abgedeckte Ventilatoren (9) angeordnet. Die Umlenkhauben (8) sind so im Zentrum der Ventilatoren (9) angeordnet, daß der von diesen Ventilatoren (9) erzeugte Blas-Luftstrom um etwa 180° umgelenkt wird. Dadurch ergeben sich Luftströmungen, wie sie etwa durch die Pfeile 10, 11 dargestellt sind, also einmal (Pfeil 10) vom Ventilator (9) weg, zum anderen (Pfeil 11) in Ansaugrichtung zum Ventilator (9) hin, jeweils über das auf dem Hordenwagen (12) liegende Gut hinweg. Hierbei wird jeweils das aus den Sprührohren (6, 7) kommende Kaltgas mitgenommen beziehungsweise über das zu kühlende Gut hinweggeführt.

## Patentansprüche

1. Verfahren zum Kühlen und Gefrieren von wasserhaltigen Lebensmitteln, insbesondere von Fleisch und Fleischwaren, in mit einem kryogenen Kühlmittel (Kaltgas) versorgten Kühlkammern, wobei das Kaltgas - vorzugsweise Stickstoff (N2) oder Kohlensäure (CO2) - in flüssigem Zustand in die Kühlkammer eingesprüht und mittels Ventilatoren über die Lebensmittel geblasen wird, wobei Überschußgas über einen Abzug entweicht,
dadurch gekennzeichnet,
daß stets nur soviel Kaltgas eingesprüht beziehungsweise eingeblasen wird, daß sich eine Temperatur der Randschicht der Lebensmittel einstellt, die in oder geringfügig oberhalb (wärmer) der Erstarrungstemperatur liegt und erst dann, wenn die Kerntemperatur ebenfalls diesen Wert erreicht hat, die Kühl- beziehungsweise Gefriertemperatur in der Kühlkammer beziehungsweise diejenige des zu kühlenden beziehungsweise zu gefrierenden Lebensmittels weiter abgesenkt (kälter) wird.

2. Verfahren nach Anspruch 1,
dadurch gekennzeichnet,
daß das flüssige Kaltgas in vom Gasdruck in der Kühlkammer und/oder von der Abkühlgeschwindigkeit in der Randschicht der Lebensmittel abhängigen Intervallen eingesprüht wird.

3. Verfahren nach Anspruch 2,
dadurch gekennzeichnet,
daß das Kaltgas beim Initialintervall bis zu einem höheren Gasdruck als bei den Normalintervallen eingesprüht wird.

4. Einrichtung zur Durchführung des Verfahrens nach den Ansprüchen 1 bis 3,
gekennzeichnet
durch eine Steuerung der Kaltgaszufuhr über einen in der Kühlkammmer angeordneten Gasdruckmesser und zwei in der Randschicht und im Kern der in exponierter Lage in der Kühlkammer befindlichen Lebensmittel angeordneten Temperaturfühler.

5. Einrichtung nach Anspruch 4,
dadurch gekennzeichnet,
daß in den Abzug eine Druckregelklappe eingefügt ist.

6. Einrichtung zur Durchführung des Verfahrens nach den Ansprüchen 1 bis 3,
gekennzeichnet
durch beidseits in der Kühlkammer angeordnete Sprührohre für das flüssige Kaltgas sowie durch einseitig in der Kühlkammer angeordnete, stets in gleicher Drehrichtung angetriebene Ventilatoren, hinter denen Umlenkhauben angebracht sind.

7. Einrichtung nach Anspruch 6,
dadurch gekennzeichnet,
daß die Umlenkhauben jeweils im Zentrum des von den Ventilatoren erzeugten Luftstromes angebracht sind und den Luftstrom durch konkave Gestaltung um etwa 180° umlenken.

8. Vorrichtung nach Anspruch 4,
gekennzeichnet
durch zwei Einstechelektroden, in deren Spitze jeweils Temperaturfühler eingefügt sind.

9. Vorrichtung nach Anspruch 8,
dadurch gekennzeichnet,
daß die Einstechelektroden leicht konisch sind.

10. Vorrichtung nach den Ansprüchen 8 oder 9,
dadurch gekennzeichnet,
daß die Einstechelektroden jeweils mit einem einstellbaren Tiefenanschlag (3) versehen sind.

## Claims

1. A process for cooling and freezing water-bearing foodstuffs, in particular meat and meat items, in cooling chambers which are supplied with a cryogenic coolant (cold gas), wherein the cold gas - preferably nitrogen (N2) or carbon dioxide (CO2) - is sprayed in the liquid condition into the cooling chamber and blown by means of fans over the foodstuffs, excess gas escaping by way of an outlet, characterised in that the amount of cold gas which is sprayed in or blown in is always only so much that the temperature which occurs in the surface layer of the foodstuffs is in or slightly above (warmer than) the freezing temperature and only when the core temperature has also reached that value is the cooling or freezing temperature in the cooling chamber or that of the foodstuff to be cooled or frozen further lowered (made colder).

2. A process according to claim 1 characterised in that the liquid cold gas is sprayed in at intervals dependent on the gas pressure in the cooling chamber and/or the rate of cooling in the surface layer of the foodstuffs.

3. A process according to claim 2 characterised in that the initial interval the cold gas is sprayed in up to a higher gas pressure than in the normal intervals.

4. Apparatus for carrying out the process according to claims 1 to 3 characterised by control of the cold gas supply by way of a gas pressure measuring device disposed in the cooling chamber, and two temperature sensors disposed in the surface layer and in the core of the foodstuffs disposed in an exposed position in the cooling chamber.

5. Apparatus according to claim 4 characterised in that a pressure regulating valve is incorporated into the outlet.

6. Apparatus for carrying out the process according to claims 1 to 3 characterised by spray pipes for the liquid cold gas, which are arranged on both sides in the cooling chamber, and by fans which are arranged at one side in the cooling chamber and which are always driven in the same direction of rotation and behind which are disposed guide hoods.

7. Apparatus according to claim 6 characterised in that the guide hoods are each disposed at the centre of the flow of air produced by the fans and guide the flow of air by virtue of a concave configuration through about 180°.

8. Apparatus according to claim 4 characterised by two penetration electrodes, in the respective tips of which are disposed temperature sensors.

9. Apparatus according to claim 8 characterised in that the penetration electrodes are slightly conical.

10. Apparatus according to claim 8 or claim 9 characterised in that the penetration electrodes are each provided with a respective adjustable depth stop (3).

## Revendications

1. Procédé pour refroidir et congeler des produits alimentaires contenant de l'eau, et en particulier de la viande et de la charcuterie, dans des chambres frigorifiques alimentées par un agent réfrigérant ou cryogénique (gaz froid), dans lequel le gaz froid - de préférence de l'azote (N₂) ou du gaz carbonique (CO₂) - est pulvérisé à l'état liquide dans la chambre frigorifique et soufflé au-dessus des produits alimentaires au moyen de ventilateurs, cependant que le gaz en excès s'échappe par un évent, caractérisé par le fait qu'à chaque instant, on pulvérise ou, respectivement, on insuffle seulement une quantité de gaz froid suffisante pour qu'il s'établisse dans la couche superficielle des produits alimentaires une température qui est égale à la température de solidification du produit alimentaire, ou légèrement supérieure (plus chaude), et que c'est seulement lorsque la température à coeur a également atteint cette valeur que l'on continue à diminuer (à rendre plus froide) la température de refroidissement ou de congélation, respectivement, dans la chambre frigorifique ou, respectivement, celle du produit alimentaire à refroidir ou à congeler, respectivement.

2. Procédé selon la revendication 1, caractérisé par le fait que le gaz froid liquide est pulvérisé à des intervalles de temps qui dépendent de la pression du gaz dans la chambre frigorifique et/ou de la vitesse de refroidissement dans la couche superficielle des produits alimentaires.

3. Procédé selon la revendication 2, caractérisé par le fait que le gaz froid est pulvérisé lors de l'intervalle de temps initial jusqu'à une pression gazeuse plus élevée que lors des intervalles de temps normaux.

4. Installation pour la mise en oeuvre du procédé selon les revendications 1 à 3, caractérisée par une commande de l'amenée de gaz froid par l'intermédiaire d'un manomètre disposé dans la chambre frigorifique et de deux capteurs de température disposés dans la couche superficielle et dans le coeur des produits alimentaires qui se trouvent en position exposée dans la chambre frigorifique.

5. Installation selon la revendication 4, caractérisée par le fait qu'un clapet de régulation de la pression est inséré dans l'évent.

6. Installation pour la mise en oeuvre du procédé selon les revendications 1 à 3, caractérisée par des tubes de pulvérisation disposés des deux côtés dans la chambre frigorifique et destinés au gaz froid liquide, ainsi que par des ventilateurs qui sont disposés d'un côté dans la chambre frigorifique, qui sont toujours entraînés dans la même direction de rotation et derrière lesquels sont montées des calottes déflectrices.

7. Installation selon la revendication 6, caractérisée par le fait que les calottes déflectrices sont à chaque fois montées au.centre du courant d'air engendré par les ventilateurs, et qu'elles dévient le courant d'air de 180° environ grâce à leur conformation concave.

8. Dispositif selon la revendication 4, caractérisé par deux électrodes à enfoncer, dans la pointe desquelles sont à chaque fois insérés des capteurs de température.

9. Dispositif selon la revendication 8, caractérisé par le fait que les électrodes à enfoncer sont légèrement coniques.

10. Dispositif selon les revendications 8 ou 9, caractérisé par le fait que les électrodes à enfoncer sont à chaque fois munies d'une butée de profondeur réglable (3).
